(19) Europäisches Patentamt
European Patent Office
Office européen des brevets

(11) **EP 4 013 006 A1**

(12) **EUROPEAN PATENT APPLICATION**

(43) Date of publication:
**15.06.2022 Bulletin 2022/24**

(21) Application number: **20306545.3**

(22) Date of filing: **11.12.2020**

(51) International Patent Classification (IPC):
*H04L 29/08* (2006.01)     *H04L 29/06* (2006.01)

(52) Cooperative Patent Classification (CPC):
**H04L 65/80; H04L 65/612; H04L 65/75;
H04L 65/752; H04L 65/762; H04L 67/104**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Streamroot**
**94110 Arcueil (FR)**

(72) Inventors:
• YOUSEF, Hiba
  75013 PARIS (FR)
• STORELLI, Alexandre
  69006 LYON (FR)
• DELMAS, Axel
  75019 PARIS (FR)

(74) Representative: **Regimbeau**
**20, rue de Chazelles**
**75847 Paris Cedex 17 (FR)**

(54) **METHOD FOR PLAYING ON A PLAYER OF A CLIENT DEVICE A CONTENT STREAMED IN A NETWORK**

(57)     The present invention relates to a method for playing on a player of a client device (11) a content streamed in a network (1) comprising a peer-to-peer network (10) of client devices (11, 12), said content consisting of a sequence of segments available in a plurality of quality levels, the player being configured so as to choose the quality level of the segments as a function of at least one parameter representative of a segment reception rate, according to an Adaptive BitRate, ABR, logic of the player; the client device (11) comprising a first buffer (M1) for storing segments in a format adapted for transferring within the network (1), the method being characterized in that it comprises performing by a processing unit (110) of the client device (11):

(a) receiving from the player a request for a current segment at a first quality level;

(b) determining, as a function of at least one parameter representative of a capacity of said peer-to-peer network (10), a second quality level;

(c) estimating an optimal response delay such that providing the requested current segment at the expiration of said optimal response delay will cause the player to request according to its ABR logic a next segment at said second quality level, as a function of a model predicting the ABR logic of the player;

(d) providing the requested current segment from the first buffer (M1) at the expiration of said estimated optimal response delay.

**FIG. 1**

## Description

FIELD OF THE INVENTION

The present invention relates to a method for playing a content streamed for example in a peer-to-peer network.

BACKGROUND OF THE INVENTION

"Streaming" designates a "direct" audio or video stream playing technique, that is while it is recovered from the Internet by a client device. Thus, it is in contrast with downloading, which requires to recover all the data of the audio or video content before being able to play it.

In the case of streaming, storing the content is temporary and partial, since data is continuously downloaded in a buffer of the client (typically the random access memory), analyzed on the fly by its processor and quickly transferred to an output interface (a screen and/or loudspeakers) and then replaced with new data.

Traditionally, the content is provided by streaming servers (referred to as a content delivery network, or CDN). The client which desires to access the content sends a request to recover first segments therefrom (by segment, it is intended a data block of the content, corresponding generally to a few seconds of playing). When there is sufficient data in the buffer to enable the beginning of the content to be played, playing starts. In the background, the stream downloading continues in order to uninterruptedly supply the buffer with the remaining part of the content.

However, it is noticed that this approach has limits if a great number of clients desire to play the same content simultaneously: the server is found to be saturated, being incapable of providing the content at a sufficient rate for playing to be fluid, and jerks occur.

Recently, an alternative strategy based on "peer-to-peer" (P2P) has been suggested, in which each client acts as a server for other clients: they are called peers. A peer which has started playing the content can forward to others segments it has already received, and so on, hence, easier broadcasting regardless of the number of clients being interested. This strategy is described in the international application WO 2012/154287.

However, most players implement what is known as Adaptive BitRate (ABR) and this proves to be problematic when combined with P2P.

The general idea of the ABR is to allow the automatic variation of the quality of the recovered segments according to the "capacities" of a peer. More precisely, each segment is available at several quality levels corresponding to several bitrates, i.e. data rates. It is indeed to be understood that a segment of better quality has better resolution, more frames per second, etc., and is consequently larger than the same segment in lower quality, therefore, it is necessary to support a higher data rate.

During ABR streaming, for each segment an algorithm automatically determines according to a given logic (referred to as "ABR logic") the best quality that can be chosen, generally in view of two criteria which are the observed bandwidth and/or the buffer filling rate.

In the first case, if the algorithm judges that the estimated bandwidth is sufficient to support higher quality, then it will instruct the client to switch to this (or conversely to lower the quality if the bandwidth is too low). In the second case, the principle is to divide the buffer memory into different intervals, each interval corresponding to an increasingly higher quality as the filling of the buffer memory increases (or more and less if it decreases).

In both cases, even if the ABR algorithms have no fundamental incompatibility to be used in a P2P streaming context, the problem is that the ABR algorithms were designed to work in a simple streaming scenario, i.e. with all segments retrieved on request from the content server.

However, in practice, P2P streaming advantageously performs "pre-fetching" (or "pre-buffering"), by downloading P2P segments into a dedicated P2P cache before the player actually requests them. Indeed, the objective of P2P streaming is to request as little as possible (and as a last resort) from the original content server: a direct request from a segment to this server is only made if there is a risk that there are no more segments in the video buffer and that playback is interrupted ("re-buffering"), otherwise there is a maximum count on the P2P network.

We are thus left from the point of view of the player with extremely high apparent bandwidth since segments can be loaded into the buffer memory from the P2P cache a fraction of a second after they have been requested. In addition, the filling rate of the video buffer is artificially high.

This causes the ABR's uncontrolled decisions to increase the quality if the current quality is not the maximum quality, regardless of the actual network capacity, to a quality that it may not necessarily be able to support.

To avoid unstable oscillations in the quality of the stream or even repeated interruptions of playing, and numerous and unnecessary requests to the content server (CDN), it has been astutely proposed in the applications FR1903195 and EP20305202 to introduce an artificial response delay before delivering a segment to the player to control the ABR algorithm, and how to choose the optimal response delay without having access to the ABR logic of the player.

For further improving the smoothness of the streaming, it has been proposed in the application EP20315054 a pre-fetching approach wherein ABR decisions (changes in segment quality) are anticipated, so as to avoid downloading segments at the old quality level (and emergency switching to CDN for retrieving the segments at the new quality level).

All of these techniques improve the QoE and limit the amount of data to be requested from CDN. However, they do not take into account the possible problems within the P2P network. Indeed, the pre-implemented ABR of the video players does not even know about the P2P existence, and ABR decisions may for instance create a shortage of some quality levels of segments within the P2P network.

It would, therefore, be desirable to have a more universal, reliable and agnostic way of controlling any ABR algorithm in a P2P streaming context.

The present invention improves this situation.

SUMMARY OF THE INVENTION

For these purposes, the present invention provides a method for playing on a player of a client device a content streamed in a network comprising a peer-to-peer network of client devices, said content consisting of a sequence of segments available in a plurality of quality levels, the player being configured so as to choose the quality level of the segments as a function of at least one parameter representative of a segment reception rate, according to an Adaptive BitRate, ABR, logic of the player; the client device comprising a first buffer for storing segments in a format adapted for transferring within the network, the method being characterized in that it comprises performing by a processing unit of the client device:

(a) receiving from the player a request for a current segment at a first quality level;
(b) determining, as a function of at least one parameter representative of a capacity of said peer-to-peer network (10), a second quality level;
(c) estimating an optimal response delay such that providing the requested current segment at the expiration of said optimal response delay will cause the player to request according to its ABR logic a next segment at said second quality level, as a function of a model predicting the ABR logic of the player;
(d) providing the requested current segment from the first buffer (M1) at the expiration of said estimated optimal response delay.

Preferred but non limiting features of the present invention are as it follows:
Said ABR logic of the player is defined by a first function of said at least one parameter representative of a segment reception rate, said model approximating the first function.

The client device further comprises a second buffer for storing segments in a format adapted for being played by the player, said current segment being provided at step (c) to said second buffer.

Said parameter representative of a segment reception rate is chosen among a buffer level of the second buffer and a bandwidth.

Said ABR logic of the player is a slave ABR logic, step (b) being performed according to a master ABR logic.

Said master ABR logic chooses the quality level of the segments as a function of both said at least one parameter representative of a segment reception rate and said at least one parameter representative of a capacity of said peer-to-peer network.

Said parameter representative of a capacity of said peer-to-peer network is chosen among a transfer speed of the peer-to-peer network, a segment availability, a rate of segment fetching, and a stability of the client devices.

The method comprises before step (d), if said next segment is not present at said second quality level in the first buffer, fetching said next segment at said second quality level from the network.

Said next segment at said second quality level is at least partially fetched directly from a content server of the network.

The method comprises a further step (e) of verifying that a request for the next segment at the second quality level is received from the player.

According to a second aspect, the invention provides a device for playing on a player a content streamed in a network comprising a peer-to-peer network of client devices, said content consisting of a sequence of segments available in a plurality of quality levels, the player being configured so as to choose the quality level of the segments as a function of at least one parameter representative of a segment reception rate, according to an Adaptive BitRate, ABR, logic of the player; the client device comprising a first buffer for storing segments in a format adapted for transferring within the network, the client device being characterized in that it comprises a processing unit implementing:

(a) receiving from the player a request for a current segment at a first quality level;
(b) determining, as a function of at least one parameter representative of a capacity of said peer-to-peer network, a second quality level;
(c) estimating an optimal response delay such that providing the requested current segment at the expiration of said optimal response delay will cause the player to request according to its ABR logic a next segment at said second quality level, as a function of a model predicting the ABR logic of the player;
(d) providing the requested current segment from the first buffer at the expiration of said estimated optimal response delay.

According to a third and a fourth aspect the invention provides a computer program product comprising code instructions to execute a method according to the first aspect for playing on a player of a client device a content streamed in a network; and a computer-readable medium, on which is stored a computer program product comprising code instructions for executing a method according to the first aspect for playing on a player of a client device a content streamed in a network.

BRIEF DESCRIPTION OF THE DRAWINGS

The above and other objects, features and advantages of this invention will be apparent in the following detailed description of an illustrative embodiment thereof, which is to be read in connection with the accompanying drawings wherein:

- Fig. 1 represents an architecture for implementing the method according to the invention;

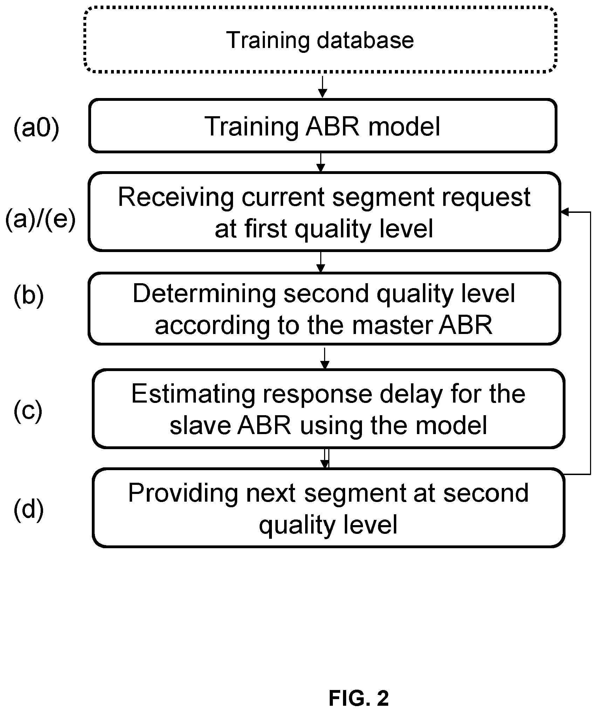

- Fig. 2 illustrates a preferred embodiment of the method according to the invention.

DETAILED DESCRIPTION OF A PREFERRED EMBODIMENT

*Architecture*

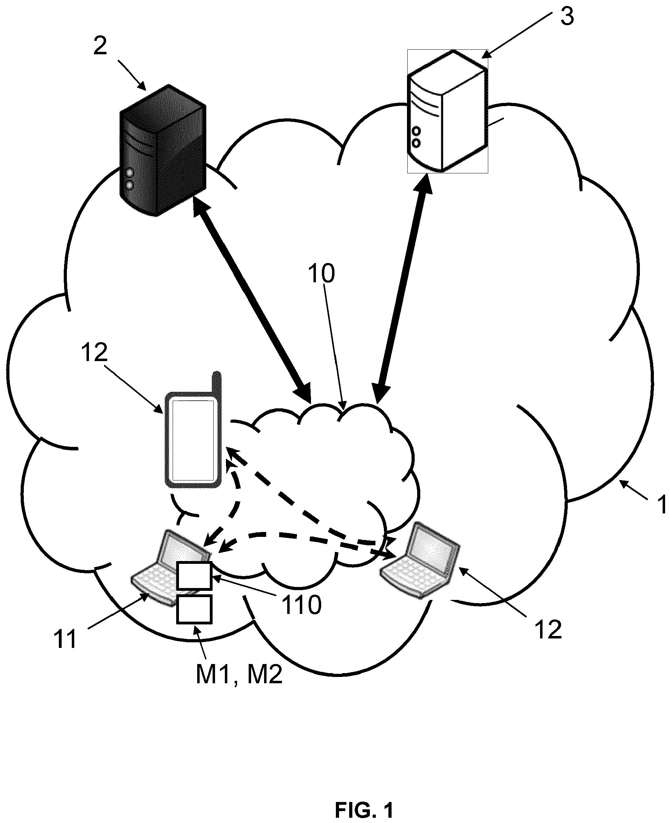

In reference to Fig. 1, the invention relates to a method for playing a content streamed within a network 1 (advantageously within a peer-to-peer network 10 of client device 11, 12) using a trained model for predicting the ABR logic of a player of a client device 11, advantageously trained according to a dedicated training method.

Network 1 is herein a large scale telecommunications network and in particular the Internet. This network 1 comprises the peer-to-peer network 10 of client devices 11, 12. Each client device 11, 12 is typically a personal computing device such as a smartphone, a PC, a tablet, etc. connected to the network 1, having a data processing unit 110 such as a processor, an interface for playing the content, and a storage unit such as a random access memory and/or a mass memory.

Playback is implemented by a player, that is to say an application executed by the data processing unit 110, which can be of a varied nature, for example a dedicated application, an internet browser in particular HTML5 compatible, an operating system module, etc. Note that the player may be defined by a name and a version.

We will assume in the following description that the player is "as is", i.e. not modified for the implementation of this process, or even for P2P streaming. In particular, the player implements an adaptive bitrate (ABR) logic, in other words said content to be played consists of a sequence of segments available in a plurality of quality levels and the player is able to decide autonomously which quality level to request, in accordance with this ABR logic. The various quality levels correspond to different bitrates, that is to say a variable volume of data per unit of time (and thus per segment). We naturally understand that better quality content requires a higher bit rate.

More details will follow regarding the concept of ABR logic, it is only to be understood that in the context of the present method it is not necessary that the ABR logic is controllable or even known: the present method is completely universal and can be adapted to any player implementing any ABR logic on the basis of any criteria. It will be assumed that the ABR logic is predefined and that the client software (see below) only undergoes it.

Furthermore, the client device 11 (and more precisely its storage unit) has two memories M1 and M2, referred to as "buffers", typically two zones of a random access memory, each being able to store (in a different way as will be seen) all or part of the content temporarily (by temporarily, it is meant that the segments are deleted from this memory shortly after they have been played: they are not stored in the long term as is the case for a direct downloading). As will be seen later, in the preferred case of playing via a browser, all the segments are typically deleted (i.e. the buffers are reinitialized) at the latest when the browser or tab in which the video is played is closed.

The first buffer M1 is called "peer-to-peer cache". It stores segments under a so-called "raw" format. By raw segments, it is meant a format adapted for transferring within the network 1, in particular within the peer-to-peer network 10, but not adapted for playing on the device 11.

The second buffer M2 is called "video buffer". It stores segments under a so-called "converted" format. By converted segments, it is meant converted from the raw segments under a format adapted for playing on the device 11, but not adapted for transferring within the peer-to-peer network 10.

As explained in the introductory part, these devices 11, 12 are "peers" (also called "nodes") of the peer-to-peer network 10.

By "client devices 11, 12 of a peer-to-peer network 10", it is meant devices connected in the network 1 by a peer-to-peer network protocol. In other words, the data processing units for each peer implement a particular program (client software, referred to as "peer agent", PA), which can be integrated with the player (for example an extension of a web browser), be a dedicated application, or even be embedded into any other software (for example the operating system of an internet access box, or a multimedia box, i.e. a "Set-top box"), for using the peer-to-peer. The present method is mainly implemented via this client software. In the following description, it will be assumed that the client software is in communication with the player so as to provide it with segments, while operating independently. More precisely, we understand that the role of the player is the playing in itself, i.e. the rendering of the segments, while the role of the client software is simply obtaining the segments for the player, the client software undergoing the operation of the player, and in particular its ABR logic.

As explained, a peer-to-peer network, or P2P, is a decentralized subnetwork within the network 1, wherein data can be directly transferred between two client devices 11, 12 of the peer-to-peer network 10, without passing through a central server. Thus, it enables all the client devices 11, 12, to play both the role of client and server. The peers 11, 12 are thus defined as "seeders" (or data suppliers) and/or "leechers" (or data receivers).

Said content, which is in particular an audio or video content, that is a media of some length, consists of a sequence of segments (called a "playlist") stored in data storage means of a server 2 connected to the peer-to-peer network 10. The segments have a predetermined length, typically one or two seconds of the content, but it can range from a fraction of a second to about ten seconds. All the segments of a given content have generally the same length.

The server 2 is a content server, advantageously present in network 1 and connected to the peer-to-peer network 10. In other words, this is one (or more) server(s) of the Internet network 1 providing the segments of various contents in accordance with a given streaming protocol. For example, the HLS ("HTTP Live Streaming") will be mentioned, in which segments are "ts" files, listed in a "m3u8" playlist file. HLS involves the MPEG2 or the fragmented MP4 format for the content. DASH, Smooth streaming, or HDS streaming protocols will also be mentioned. The raw segments may be shared between peers via a protocol of the WebRTC type.

The server 2 is the primary source of the segments, insofar as initially no peer has the content (before a first transfer of the server 2 to this peer 11, 12). The contents are either at the very beginning stored integrally on the server 2 (case of the VOD previously discussed), or generated in real time (case of the live streaming), and in the latter case, the list of segments making it up dynamically changes over time.

Live streaming proposes to broadcast in real time contents associated with "live" events, for example concerts, meetings, sports events, video games, etc., which are simultaneously happening. With respect to streaming of already integrally existing content as a film, a live streaming broadcast content is actually generated gradually as the associated event happens. Technically, as in the case of a live event on TV, such content can only be broadcast with some delay, which the user wishes to be as small as possible. This delay is typically in the order of one minute, but can go down to about twenty seconds. Thereby, a playlist of only a few segments (at most some tens) is available at each instant, the segments of this list being dynamically renewed in accordance with a turnover: as the event happens, new segments are created, "age", are received and played by clients (at the end of the expected delay), and finally exit the list.

In the latter case (live streaming), the content should rather be seen as a continuous stream. The sequence of segments is thereby dynamic, that is it is regularly updated. Each time a new segment is generated, it is added at the end of the sequence, and the first segment of the sequence (the oldest) is deleted. All the others are offset according to a turnover mechanism which can be related to a FIFO ("first in, first out") list. The first segment of the list (the oldest one) can be either a "live" or "past" segment. The "live" segment is the segment at the playing edge, and thus, the segments are deleted from the playlist as soon as they are played. The "past" segment exists when the content server 2 accepts that the content is played with some delay e.g. DVR (Digital Video Recorder) and other platforms that allow live streaming with up to a 2h delay.

The present method may be implemented in any context.

The peer-to-peer network 10 is also connected to a peer management server 3 called a "tracker". The tracker 3 has data processing means and storage means. It coordinates exchanges between peers 11, 12 (by controlling the client software implemented by each of the client devices 11, 12), but it is not directly involved in data transfer and does not have a copy of the file.

As explained, a dedicated method for training the model for predicting the ABR logic of the player may be implemented, either by the processing unit 110 of a client device 11 (or of another client device 12) or directly by the peer management server 3.

As it will be explained, the equipment performing the training has to store a training database made of data associated to a plurality of training segments already provided to the player (pairs of a vector of parameters representative of a segment reception rate measured when said training segment has been requested to the player and the corresponding quality level subsequently chosen by the player according to its ABR logic).

Note that there may be as many models (and databases) as types and versions of players, and the model for a given player may be learnt by a client device 11, 12 or the server 3, and provided to all the client devices 11, 12 (directly from the server 3, or propagated as P2P messages) for predicting the ABR logic of this particular player at each client device 11, 12. Note that each client device 11, 12 may choose to receive only models corresponding to players it implements (and for example removes the previous model if there is a new version of a given player).

*ABR logic*

As already explained, the player of the client device 11 is configured so as to choose the quality level of the segments as a function of at least one parameter representative of a segment reception rate, according to an ABR logic of the player.

In any case, the ABR logic can be defined by means of a first function making it possible to calculate the quality level to be chosen (the bitrate) as a function of said at least one parameter representative of a reception rate of segments. More precisely, said first function is generally called by the player at each segment received, and the output is the quality level at which the next segment will be requested. Note that said output can be expressed in particular as an integer level number (for example between 1 and L, where 1 is the worst quality and L is the best quality or the opposite), or directly as a bitrate value (either a discrete value chosen among a possible bit rate values, or a continuous bitrate value). Said first function is supposed to be a "black box".

It is understood that said parameter representative of a segment reception rate is a monitored parameter, which can be any parameter illustrating the capacity of the device 11 and / or of the network 10 to receive the segments "fast enough". As mentioned, the known ABR logics generally use as a parameter a buffer level of the second buffer memory M2 (either in value, i.e. in seconds or in number of segments, or in rate) and/or a bandwidth (i.e. the data reception rate observed).

In other words, the player monitors the bandwidth and/or the buffer level, and consequently makes decisions as to whether or not to modify the quality level of the segments required.

Note that other parameters are sometimes taken into account, such as device capabilities (including the CPU/GPU load and decoding capabilities, available memory, screen size, etc.) and/or user geographical location.

Thus, there are three main classes of ABR logic:

- The "BB" class, for buffer-based ABR logic;
- The "RB" class, for rate-based ABR logic;
- The "H" class, for hybrid (buffer-rate-based) ABR logic.

Note there might be further classes. The following specification will take the example of these three classes but the skilled person will understand that the present method is not limited to any set of possible ABR logic classes.

*Model predicting the ABR logic*

The present method uses a model predicting the ABR logic, i.e. approximating the above-mentioned first function defining the ABR logic, regardless of the actual class of the ABR logic.

Said model may be predefined, but preferably machine learning (ML) algorithms can be used to train the model, as proposed in the application EP20305202.

Mathematically, a vector of parameters can be built for any given segment (once requested and received by the player), where the vector of parameters is representative of a segment reception rate measured when said given segment has been requested by the player (i.e. an "input vector" $x^m$ for a segment $m \in [\![1; M]\!]$) associated to the corresponding quality level subsequently chosen by the player according to its ABR logic (i.e. the "scalar output" $y^m = [br_m]$, $br_m$ being the bitrate

decision for the segment $m$).

The idea is to include in the input vector $x^m$ any possible parameter representative of a segment reception rate so as to encompass any possible ABR class and logic, such as $b_m$ the buffer level at which the segment $m$ is requested, $s_m$ the segment size, $t_m$ the segment download time, $bw_m$ the measured bandwidth of segment $m$, $bw_{m-1}$ the measured bandwidth for the previous segment, etc.

The pair of an input vector $x^m$ and the corresponding scalar output $y^m$ is denoted a training example, and a database of training examples may be built for performing a machine learning algorithm so as to train a model. It is to be understood that, as explained, each training example corresponds to the actual reception of a given segment (that can be referred to as a training segment) by the player. In other words, each training example associates a vector of parameters representative of a segment reception rate measured when a training segment has been received by the player, and the corresponding quality level subsequently chosen by the player according to its ABR logic for requesting the next segment.

Said model can be defined as the relation between the input and the output, in particular a "hypothesis" $h_\theta$ parameterized with a vector $\theta$ of model parameters such that for each input vector $x^m$ the value $h_\theta(x^m)$ is as close as possible to $y^m$.

Thus, by measuring in real time the current parameters representative of a segment reception rate and generating a current input vector $x^i$, the hypothesis $h_\theta(x^i)$ can be used to predict the output $\hat{y}^i$ which is the bitrate at which next segment will be requested by the player.

Thus, the present method advantageously comprises an initial step (a0) of training a model from said database of training examples each associating a vector of measured parameters representative of a segment reception rate (i.e. measured for a given segment, when it had been requested by the player) with the corresponding quality level subsequently chosen by the player according to its ABR logic (when requesting the next segment).

Note that any type of model and any kind of machine learning algorithm may be used.

Preferably, the model is a linear function approximating said first function (linear regression), and it is learnt by linear least square (LLS) techniques, in particular ordinary least squares (OLS) techniques, but the skilled person could use other models (notably polynomial, non-linear, etc.) and other machine learning techniques (Bayesian, k-Nearest Neighbors, Support Vector Machine, etc.).

As explained, step (a0) may be performed locally by the client 11, or in a centralized way at the server 3. In any case, the training examples may be transmitted within the network 1 for constituting the training database. For example, raw data may be collected from various clients 11, 12 at the server 3, wherein processed training data (such as the training matrix X and the training vector Y) is built, and possibly sent back.

Further, as explained in the already cited application EP20305202, step (a0) preferentially comprises training a plurality of models (in parallel), one for each class of ABR logic, so as to safely remove the redundant features and keeping only the actual inputs of the ABR logic as implemented by the player (ABR logics of BB, RB and H classes use different input variables). In our example, there are K=3 classes (BB, RB and H) so that 3 models are trained.

For a given player, only one of the K models is actually true (i.e. properly predicts the ABR logic of the player). Therefore, step (a0) advantageously further comprises verifying the K models so as to select the appropriate one (the others are discarded) in particular by building a test set (i.e. keeping some pairs $(x^m, y^m)$) to check the categorical accuracy on said test set.

Finally, the selected model might be shared with any device 11, 12 so as to be used at large scale. Propagation of this model amongst peers may be done either from the server 3 or directly by P2P. Note that any peer receiving a model may test it and/or refine it by restarting a new training step (a0).

*Overriding the existing ABR logic*

The present invention mostly proposes to override the existing ABR logic of the player with a new ABR logic, that will be referred to as "master" ABR logic, this time optimized towards P2P mechanisms, integrated outside the player. The master ABR logic can thus be coined as "P2P-friendly" ABR logic, by contrast with the existing ABR logic of the player (that will be referred to as "slave" ABR logic) which is not aware of the P2P network 10.

In other words, this strategy implements a two-stage master/slave ABR logic wherein the master ABR is the P2P-friendly one and the slave ABR is the existing one. To rephrase again, instead of "altering" the existing ABR logic (that would be impossible because as explained this ABR algorithm is embedded within the player), the principle of the present invention is to control this existing ABR to follow another master ABR strategy further based on at least one P2P metric.

The master ABR logic actually takes the ABR decisions (taking into the P2P context), such decisions being applied by luring the slave ABR logic into taking the same ABR decisions. The existing ABR logic of the player does not know that there is a "masterminding" ABR logic.

In the following description, we focus on client device 11 which is trying to retrieve the content from other devices 12 and / or the server 2, that is to say, the first buffer M1 already stores at least one raw segment, in at least one quality level, if possible a sub-sequence of the sequence constituting the content.

It is supposed that the model suitable for the player (i.e. predicting the ABR logic of said player) is already trained, selected and available to the device 11.

The method then begins with the implementation by the processing means 110 of the device 11 of a step (a) of receiving a request for a segment (referred to as "current segment"), in practice the next segment to be put in the second buffer memory M2 (not necessarily the next segment to played, there are normally several segments buffered in advance). Said request is received from the player, and defines the quality level which is required for the requested segment, i.e. the bitrate (by applying the slave ABR logic), referred to as "first quality level".

It is assumed that said segment is at least partially available at this stage (i.e. at least a fragment) in the first buffer M1, in the first quality required by the player. If this segment / segment fragment was in another quality, it would have to be retrieved again, generally directly from the content server 2 because we are running out of time.

Step (a) includes, if necessary, the "measurement" of said at least one parameter representative of a segment reception rate (to be used by at least the slave ABR logic, and generally also the master ABR logic), and/or a parameter representative of a capacity of said peer-to-peer network 10 (to be used by the master ABR logic). Note that the bandwidth as parameter representative of a segment reception rate may be smoothed (EWMA or any other methods) to help in smoothing the quality transitions.

By "parameter representative of a capacity of said peer-to-peer network 10", it is meant any P2P metric that may be of interest to the skilled person for evaluating the efficiency of the peer-to-peer network 10 and its ability to accept (or not) a higher bitrate. It should be understood that the P2P-friendly ABR is just a generalization of the principle of an ABR to allow the automatic variation of the quality of the recovered segments according not only to the capacities of a peer, but also to the capacities of the whole P2P network.

For example, the following parameters may be used as parameter representative of a capacity of said peer-to-peer network 10:

- Segment availability (either in the local P2P cache M1 or in remote peers' caches) in higher qualities than the first quality level, which is the preferred one.
- Total P2P network 10 transfer speed, average transfer speed, and/or ratio of the transfer speed over the maximum speed (with respect to the top seeders speed and/or the CDN speed);
- Stability of the client devices 11, 12 of the P2P network 10, the qualities available in the caches M1 of the most stable peers are highly preferred to the ones available from other peers;
- Transfer performances of individual client devices 11, 12 of the P2P network 10, including time to first byte during requests, round-trip time and steady state throughput - Correlation between said individual transfer performances;

- P2P cached segment size (percentage of completed segments);
- Rate of fetching from top seeders over other peers;
- Etc.

We will describe more in detail some of the cited above examples, but the invention will not be limited to those and the skilled person will know how to adapt the invention to any parameter representative of a capacity of said peer-to-peer network 10.

1- Segment availability

It is easy for the client 11 to know the availability of segments in its own local buffer M1. To know it in the whole P2P network 10, it is possible to have peers announcing their segments. Note that when seeders are only slightly ahead of the peer (which is especially the case for LIVE streaming), they may advertise their segments too late for the ABR logic to be able to properly take this information into account. Consequently, we may have peers further reporting the probability of having a segment in a short time (in addition to the segments they already have), in order to have a complete panorama of segment availability. Alternatively, the client 11 could directly study the patterns of availability of segments for different seeders, and predict the probability of a given seeder to have a segment at a given time.

Said parameter is thus quite easy to obtain and it gives a reliable estimation of the capacity of the P2P network 10, in particular to handle an increase of the quality level.

2- Transfer speed

Here the "top seeders" may be defined with respect to their maximum transfer speed, their stability over time (stability of said transfer speed) and/or segment availability. We may have a "Smart Peer-selection" to determine said top peers.

For estimating the transfer speed of a remote peer (i.e. the reachable download speed when using this peer as a seeder) from a requesting peer (such as the present client 11), the requesting peer can maintain a variable-size box of tokens representing the number of chunks that can be requested to the remote peer at a point in time. The size of the token box is controlled based on the remote peer queue using RTT measures. This algorithm can estimate the remote peer capacity by dividing the number of tokens (chunks) reserved for each peer by the RTT. And by summing the different peers capacities, we can have a good estimate of the total P2P network 10 transfer speed.

3- Predicting peer behavior or Stability:

It is important for the master ABR to consider the stability of the resources before any decision. For instance, knowing the stability may allow to:

- Predict when peers disconnect (End of VOD for example)
- Decide how risky it is to change the quality level.
- How much data can be obtained from peers before they leave.
- Improve the lifetime for unstable peers by offering better QoS.

A lot of metrics about stability of client devices 11, 12 are known to the skilled person, and many works have proposed different algorithms to stabilize the peer pool. In particular, machine learning techniques may be used to predict the user behavior in a streaming session. And it is shown that the user stays longer when he experiences good QoE and when he watches popular content with less advertisements. Thus, the skilled person can use any algorithm to first predict the popularity of the content, and then to predict the user engagement during the streaming session before considering it as a stable user.

In a following step (b), a second quality level is determined as a function of said at least one parameter representative of an efficiency of said peer-to-peer network 10, and preferably also as a function of said parameter representative of a segment reception rate. In other words, said second quality level (to be applied) is determined according to the master ABR logic.

Here, any strategy may be used for the master ABR logic, as long as it takes into account the efficiency of said peer-to-peer network 10 when taking a decision. As already explained, it is to be understood that the P2P-friendly ABR is just a generalization of the principle of an ABR to allow the automatic variation of the quality of the recovered segments according not only to the capacities of a peer but also to the capacities of the whole P2P network

While known ABR logics (including said slave ABR logic) automatically determine the best quality that can be chosen in view of said at least one parameter representative of a segment reception rate, the present master ABR logic automatically determines the best quality that can be chosen in view of said at least one parameter representative of a capacity of said peer-to-peer network 10 (and preferably also in view of said parameter representative of a segment reception rate).

In particular, this master ABR logic can be designed as an extension of an existing ABR logic, with further rules about the P2P network 10 behavior. For instance, the master ABR logic may allow an increase of the quality level (proposed on the basis of the parameter representative of a segment reception rate) if there is enough availability of the segments in the higher quality levels, and else keep the current quality level.

In a preferred embodiment, the master ABR logic can be tackled as any optimization problem, and for instance a learning problem, from online learning algorithms such as online convex optimization, reinforcement learning or any online decision problems algorithms.

All these algorithms intersect at learning from past observations and predicting the best future decision. They basically calculate a sort of loss or utility function to evaluate how good the decision is. It is thus possible to formulate an optimization problem on the quality level under constraint with "desired" metric to reward and/or an "undesired" metric to penalize, for instance:

- Rewarded metrics: Segment quality (average bitrate), availability from P2P
- Penalized metrics: Quality switches, rebuffering, startup delay
- Constrained: the second quality level should be higher or equal to the predicted one (if using the ABR prediction model)

Each time this optimization problem is solved, the second quality level is chosen accordingly.

Note that the master ABR logic may be configured to gradually increase the quality, so as to avoid unnecessary switches (case where we have up-down-up or down-up-down, this middle quality is unnecessary for one segment here).

*Application of the master ABR decisions*

In steps (c) and (d), the model is used to ensure that the player will request, according to its (slave) ABR logic, a next segment (with respect to the current segment, i.e. segment m + 1 if current segment is segment m) at the second quality level previously determined, after said requested current segment is provided from the first buffer M1.

In other words, the second quality level is as explained a goal to reach by actively controlling the ABR logic of the player using the response delay, as proposed in the application FR1903195.

Therefore, in step (c), an optimal response delay is estimated such that providing the requested current segment at the expiration of said optimal response delay will cause the player to request according to its ABR logic a next segment at said second quality level, as a function of a model predicting the ABR logic of the player

Hence, the slave ABR logic is controlled so as to "force" it to request the next segment at the second quality level. By optimal response delay it is meant a response delay suitable for causing the slave ABR logic to request the second quality level (thus the optimal response delay is not necessarily unique, and generally there is a "range" of optimal response delay). Mathematically, for the next segment $m + 1$, we have to trigger an input vector $x_{m+1}$ of the model such that $\hat{y}_{m+1} = h_\theta(x_{m+1})$

is the second quality level expected to be requested.

To this end, it is first important to understand the relation between the response delay and the input variables of the model: if $p$ is the segment duration (generally fixed) and $d_m$ is the response delay to apply for the current segment $m$, we have:

- $b_{m+1} = b_m + p - d_m$, because the buffer will be gradually emptied by the playing (useful for BB-models and H-models);

$$bw_{m+1} = \frac{s_{m+1}}{t_{m+1}} \approx \frac{s_m}{d_m},$$

- because the delay may be translated as download time (the actual transfer time is nearly zero as the segment is already downloaded in the first buffer M1) and $s_m$ is often nearly constant (useful for RB-models and H-models).

Other parameters of the input vector $x_{m+1}$ may be estimated from measurements and parameters of the current vector $x_m$. Note that some parameters estimated for calculating $x_m$ might have been estimated from $x_{m-1}$, and their value corrected ($b_m$ can be measured).

The application EP20305202 explains how to efficiently "reverse" the model to determine the input vector $x_{m+1}$ such that $y_{m+1} = h_\theta(x_{m+1})$. It is to be understood that solving such an optimization problem is within the grasp of a skilled person.

In the case where it is only a fragment of the requested segment which has been retrieved from the P2P network (it is said that the segment is available in an incomplete manner), preferably the estimated optimal response delay is modified according to the length of the fragment so as to reflect the fact that only a fragment of the optimal response delay should actually be applied. Indeed, the second buffer M2 can only be provided with complete segments and not fragments, and the idea is to provide the segment in full after a shorter response delay reflecting the fact that there will already be an implicit waiting delay corresponding to the time to complete (finish retrieving) this segment in the first buffer M1. Thus, step (b) may include modifying the estimated optimal response delay as a function of an estimated duration necessary to finish retrieving the segment.

For example, we could apply the formula $d'_m = d_m - tdw_m$, where $d'_m$ is the modified optimal response delay and $tdw_m$ is the estimated time needed to finish retrieving the segment. So, waiting for time $tdw_m$ plus applying $d'_m$ before delivering the full segment is equivalent to applying $d_m$, so the overall delay remains the same.

Then, in the step (d) the current segment (segment $m$) is provided in response to the request, from the first buffer M1, at the expiration of said estimated optimal response delay.

By "provided at the expiration of said response time" is meant so that the player does not have it before the expiration of the response delay (at best at the time of expiration, or even only after in some cases, see below). Most often, the segment is transmitted suddenly when the response delay expires, but it will be understood that it is quite possible to "stream" it within device 11, i.e. to transmit it from the first buffer M1 gradually (piece after piece) so that the last piece is transmitted (at the earliest) when the optimal response delay expires (the optimal response delay is then a "transmission time of the last bit of the segment"). Indeed, although only complete segments are playable, some players can accept sub-segments of the segment. Note that such a progressive transmission does not change anything since as long as the segment is not fully received it is not available by the player and therefore not considered to be provided, but makes it possible to facilitate bandwidth measurements.

In the case where only a fragment of the segment was available in the first buffer M1 and the response time has been modified according to an estimated duration necessary to finish recovering the segment, normally the segment is also supplied to the step (d) at the end of the modified response time. As explained, although the supply can be fragmented, one should not confuse sub-segments of a complete segment (which correspond to consecutive pieces of segment obtained from a completely downloaded segment) and an incomplete segment (in which only certain parts of the data, most often corresponding to disparate pieces, have been downloaded). Only a segment completely available in the first buffer M1 can be provided (progressively if necessary) in response to the request (and not a fragment), so that if the download takes longer than expected, the segment may not be fully available until after the modified response delay has expired. Thus, as explained the complete segment is provided at the earliest at the expiration of the modified optimal response delay (i.e. not before), but possibly after. In practice, the complete segment is provided when the following two conditions are satisfied: the segment is completely available (its download is complete), and the modified optimal response delay has expired.

In all cases, the segment is preferably provided to the second buffer M2, and as such step (d) can comprise the conversion into a format suitable for playing said segment. This consists in transforming the raw segment into a converted segment, which can be read by the player of the device 11, unlike the raw one.

For example, if the player is the built-in player of an HTML5 compatible browser, the conversion consists of injecting the segment's video data using the Media Source Extension API of the browser

Naturally, step (d) advantageously comprises simultaneously playing a previous segment (for instance segment $m - 1$, but possibly an even older segment) stored in the second buffer memory M2, so that the segments need to be renewed. The segment retrieved in step (d) will soon be read in turn.

We can now repeat steps (a) to (d) as long as the playing lasts: the next segment is now the new current segment, and the second quality level is now the new first quality level (possibly because of the application of the optimal response delay which has forced said second quality level as predicted)

In other words, a new occurrence of step (a) consists in receiving from the player a request for the next segment at the second quality level. Again, a third quality level may be determined according to its ABR logic for the next segment (i.e. segment $m + 2$), and in particular a new optimal response delay (such that providing the requested next segment at the expiration of said new optimal response delay will cause the player to request according to its ABR logic a next segment at said third quality level) could be estimated then applied, etc. Note that there is not necessarily a master ABR decision at each segment (step (b) may be provided from time to time and/or a horizon of k segments can be taken into account before switching the quality).

Note that the method may include a step (e), at the end of step (d), for verifying the prediction. In other words, it is verified that a request for the next segment at the second quality level is received from the player. This step (e) is typically included in the next occurrence of step (a), wherein the request for the next segment is actually received. Verification simply involves comparing the predicted/intended second quality level with the quality level actually requested for the next segment (by the ABR logic).

*Pre-fetching*

As proposed in the application EP20315054, the present method may comprise (before step (d), i.e. typically during the response delay), if said next segment (segment $m + 1$) is not present at said second quality level in the first buffer M1), fetching it from the network 1 (i.e. performing "pre-fetching", as we are at least one segment ahead).

In other words, while the next segment should have been normally fetched at the first quality level (which is still the current quality), here the switch to the second quality level is anticipated, so as to save bandwidth. Indeed, if the segment was fetched at the first quality level, the first buffer M1 would have to discard it if the second quality level was different from the first quality level. As the second quality level is taken into account in advance, bandwidth is saved.

By "fetching", it is meant obtaining said segment from the network 1, by download to the P2P cache M1 from at least one another peer 12 of the P2P network 10 and/or from the content server 2 (CDN), as it explained in the application EP20315054. Note that said next segment may actually have already been entirely downloaded, in particular if the second quality level is the same as the first quality level, so that no further action is necessary.

It is of course preferred to pre-fetch from the P2P network 10, but it may be enabled to pre-fetch from the CDN 2:

- If a big part of the segment can be obtained from P2P network 10 in time (before the expiration of the response delay), then the CDN can be used to download the small part left.
- If the CDN is slower than P2P, but the peers do not have all segments, the missing segments can be scheduled very early to get them from CDN and get the rest from peers.
- If peers have the next segments on a higher quality level than the available one, but some segments (or parts of the next segments) are missing, the CDN can be used to fetch the missing data.

Note that the prefetching is even more advantageous in the present application, because the second quality level is known very early and as explained a horizon of k segments can be taken into account before switching the quality, so that the fetching of several segments in advance is possible.

*Device and computer program product*

According to a second aspect, the invention concerns the device 11 for performing the previous described method for playing a content (streamed in a peer-to-peer network 10 of client devices 11, 12) on a player of the device 11 configured so as to choose the quality level of the segments as a function of at least one parameter representative of a segment reception rate, according to an ABR logic of the player.

This device 11 comprises as explained:

- a first buffer M1 (P2P cache) for storing segments in a format adapted for transferring within the peer-to-peer network 10;
- Preferably a second buffer M2 (video buffer) for storing segments in a format adapted for being played by the player;
- a processing unit 110.

The processing unit 110, typically a processor, is implementing the following steps:

(a) receiving from the player a request for a current segment at a first quality level;
(b) determining, as a function of at least one parameter representative of a capacity of said peer-to-peer network 10, a second quality level;
(c) estimating an optimal response delay such that providing the requested current segment at the expiration of said optimal response delay will cause the player to request according to its ABR logic a next segment at said second quality level, as a function of a model predicting the ABR logic of the player
(d) providing the requested current segment from the first buffer M1 at the expiration of said estimated optimal response delay.

In a third and fourth aspect, the invention concerns a computer program product comprising code instructions to execute a method (particularly on the data processing unit 110 of the device 11) according to the first aspect of the invention for playing on a player of a client device 11 a content streamed in a peer-to-peer network 10 of client devices 11, 12, and storage means readable by computer equipment (memory of the device 11) provided with this computer program product.

**Claims**

1. A method for playing on a player of a client device (11) a content streamed in a network (1) comprising a peer-to-peer network (10) of client devices (11, 12), said content consisting of a sequence of segments available in a plurality of quality levels, the player being configured so as to choose the quality level of the segments as a function of at least one parameter representative of a segment reception rate, according to an Adaptive BitRate, ABR, logic of the player; the client device (11) comprising a first buffer (M1) for storing segments in a format adapted for transferring within the network (1), the method being **characterized in that** it comprises performing by a processing unit (110) of the client device (11):

(a) receiving from the player a request for a current segment at a first quality level;
(b) determining, as a function of at least one parameter representative of a capacity of said peer-to-peer network (10), a second quality level;
(c) estimating an optimal response delay such that providing the requested current segment at the expiration of said optimal response delay will cause the player to request according to its ABR logic a next segment at said second quality level, as a function of a model predicting the ABR logic of the player;
(d) providing the requested current segment from the first buffer (M1) at the expiration of said estimated optimal response delay.

2. A method according to claim 1, wherein said ABR logic of the player is defined by a first function of said at least one parameter representative of a segment reception rate, said model approximating the first function.

3. A method according to one of claims 1 and 2, wherein the client device (11) further comprises a second buffer (M2) for storing segments in a format adapted for being played by the player, said current segment being provided at step (c) to said second buffer (M2).

4. A method according to claim 3, wherein said parameter representative of a segment reception rate is chosen among a buffer level of the second buffer (M2) and a bandwidth.

5. A method according to any one of claims 1 to 4, wherein said ABR logic of the player is a slave ABR logic, step (b) being performed according to a master ABR logic.

6. A method according to claim 5, wherein said master ABR logic chooses the quality level of the segments as a function of both said at least one parameter representative of a segment reception rate and said at least one parameter representative of a capacity of said peer-to-peer network (10).

7. A method according to any one of claims 1 to 6, wherein said parameter representative of a capacity of said peer-to-peer network (10) is chosen among a transfer speed of the peer-to-peer network (10), a segment availability, a rate of segment fetching, and a stability of the client devices (11, 12).

8. A method according to any one of claims 1 to 7, comprising before step (d), if said next segment is not present at said second quality level in the first buffer (M1), fetching said next segment at said second quality level from the network (1).

9. A method according to claim 8, wherein, said next segment at said second quality level is at least partially fetched directly from a content server (2) of the network (1).

10. A method according to any one of claims 1 to 9, comprising a further step (e) of verifying that a request for the next segment at the second quality level is received from the player.

11. A device for playing on a player a content streamed in a network (1) comprising a peer-to-peer network (10) of client devices (11, 12), said content consisting of a sequence of segments available in a plurality of quality levels, the player being configured so as to choose the quality level of the segments as a function of at least one parameter representative of a segment reception rate, according to an Adaptive BitRate, ABR, logic of the player; the client device (11) comprising a first buffer (M1) for storing segments in a format adapted for transferring within the network (1), the client device (11) being **characterized in that** it comprises a processing unit (110) implementing:

   (a) receiving from the player a request for a current segment at a first quality level;
   (b) determining, as a function of at least one parameter representative of a capacity of said peer-to-peer network (10), a second quality level;
(c) estimating an optimal response delay such that providing the requested current segment at the expiration of said optimal response delay will cause the player to request according to its ABR logic a next segment at said second quality level, as a function of a model predicting the ABR logic of the player;
(d) providing the requested current segment from the first buffer (M1) at the expiration of said estimated optimal response delay.

12. Computer program product comprising code instructions to execute a method according to one of claims 1 to 10 for playing on a player of a client device (11) a content streamed in a network (1), when said program is executed on a computer.

13. A computer-readable medium, on which is stored a computer program product comprising code instructions for executing a method according to any one of claims 1 to 10 for playing on a player of a client device (11) a content streamed in a network (1).

FIG. 1

Training database

(a0) — Training ABR model

(a)/(e) — Receiving current segment request at first quality level

(b) — Determining second quality level according to the master ABR

(c) — Estimating response delay for the slave ABR using the model

(d) — Providing next segment at second quality level

FIG. 2

Europäisches
Patentamt

European
Patent Office

Office européen
des brevets

## EUROPEAN SEARCH REPORT

**Application Number**

EP 20 30 6545

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/082924 A1 (GOPALAKRISHNAN KUMAR [US]) 7 April 2011 (2011-04-07) * abstract * * paragraph [0039] - paragraph [0040] * * paragraph [0130] - paragraph [0134] * * paragraph [0154] - paragraph [0177] * ----- | 1-13 | INV. H04L29/08 H04L29/06 |
| A | US 2015/120952 A1 (ROVERSO ROBERTO [SE] ET AL) 30 April 2015 (2015-04-30) * abstract * * paragraph [0005] - paragraph [0062] * ----- | 1-13 | |
| | | | TECHNICAL FIELDS SEARCHED (IPC) |
| | | | H04L |

The present search report has been drawn up for all claims

| Place of search | Date of completion of the search | Examiner |
|---|---|---|
| The Hague | 15 March 2021 | Stergiou, Christos |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 30 6545

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2021

| Patent document cited in search report | Publication date | Patent family member(s) | Publication date |
|---|---|---|---|
| US 2011082924 A1 | 07-04-2011 | EP 2486491 A1<br>US 2011082924 A1<br>US 2011082946 A1<br>WO 2011044287 A1 | 15-08-2012<br>07-04-2011<br>07-04-2011<br>14-04-2011 |
| US 2015120952 A1 | 30-04-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012154287 A
- FR 1903195
- EP 20305202 A
- EP 20315054 A